(19) Europäisches Patentamt
European Patent Office
Office européen des brevets

(11) **EP 4 683 237 A1**

(12) **EUROPEAN PATENT APPLICATION**

(43) Date of publication:
**21.01.2026 Bulletin 2026/04**

(21) Application number: **24189822.0**

(22) Date of filing: **19.07.2024**

(51) International Patent Classification (IPC):
*H04B 7/024* (2017.01)

(52) Cooperative Patent Classification (CPC):
**H04B 7/024; H04W 56/005; H04W 56/0055**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Koninklijke Philips N.V.**
**5656 AG Eindhoven (NL)**

(72) Inventor: **GARCIA MORCHON, Oscar**
**Eindhoven (NL)**

(74) Representative: **Philips Intellectual Property & Standards**
**High Tech Campus 52**
**5656 AG Eindhoven (NL)**

(54) **METHOD AND APPARATUS FOR MULTI-AP WITH TIME-SYNCHRONIZED BEAMS**

(57) There are provide methods, apparatuses and computer program products for managing joint/coordinated transmission from a first access point and a second access point to a station with a view to improving such transmissions and the establishment of joint/coordinated communications. A method comprises receiving, by the station, a first message from the first access point, receiving, by the station, a second message from the second access point, computing, by the station, a measurement report, transmitting, by the station, the measurement report, and adapting the station to receive a joint/coordinated data transmission from the first and the second access points.

Fig. 1

**Description**

FIELD OF THE INVENTION

The present invention relates to wireless networks, in particular those conforming to the IEEE 802.11 standard.

BACKGROUND OF THE INVENTION

IEEE 802.11 (Wi-Fi) has introduced the usage of multi access point systems wherein two or more access points can coordinate to communicate with wireless devices called stations (STAs). Wi-Fi also uses multiple input multiple output (MIMO) communication technology which allows an access point to transmit to multiple users in the downlink in the so called multi-user MIMO (MU-MIMO). Wi-Fi has also introduced so called multi-link devices (MLD) - both access points and stations may be MLDs. An MLD AP may simultaneously use communication resources of two or more of a 2.4 GHz link, a 5 GHz link, and a 6 GHz link to communicate with an MLD station.

Cellular systems such as 5G are capable of joint transmission wherein two access devices, e.g., two base stations, can transmit the same data to a same wireless device, a so-called user equipment. This joint transmission is made possible by means of beam forming which allows the steering the transmission beams of the antennas of the two base stations towards the wireless device, and by means of the tight synchronization that is feasible in a cellular system wherein the communication resources are precisely synchronized and scheduled.

Joint (or coordinated) transmission may be feasible in cellular and Wi-Fi systems between access devices and a wireless device. It use more difficult in so-called sidelink communication wherein relay wireless devices facilitate the communication of one or more remote wireless devices, when communicating with each other or with the network.

SUMMARY OF THE INVENTION

The present invention attempts to address these situations, there present invention being defined by the appended claims.

According to an aspect, there is provided a method for managing joint/coordinated transmission from a first access point and a second access point to a station comprising receiving, by the station, a first message from the first access point, receiving, by the station, a second message from the second access point, computing, by the station, a measurement report, transmitting, by the station, the measurement report, and adapting the station to receive a joint/coordinated data transmission from the first and the second access points.

From the measurement report, the access point(s) may determine whether joint/coordinated transmission is desirable i.e. may achieve better performance in the communications with the STA. Also, the access point(s) may use the measurement report in order to establish coordination between their beamforming with the station.

According to an embodiment the measurement report includes the time difference between the reception of the first message from the first access point and the reception of the second message from the second access point.

According to an embodiment, the first message includes a request to perform a joint/coordinated transmission, and the station indicates whether it accepts the joint/coordinated transmission in the measurement report.

According to an embodiment, the station compares a transmission characteristic to at least one of either a first or a second threshold and wherein the station sends an indication of a change of a selection between the first and second thresholds.

According to an aspect, there is provided a method of managing joint/coordinated transmission from a first access point and a second access point to a station comprising sending, by the first access point, a first message, receiving, by the first access point, a second message from the second access point, receiving, by the first access point, a third message from the station, receiving, by the first access point, a fourth message from the second access point, and determining, by the first access point, a first time-delay from the second message, the third, and the fourth messages.

When the access point possesses the time-delay, particularly when the access point has the time-delays from the station to both access points, the access point is able to calculate the time at which data messages should be transmitted from the access points to the station so as to arrive at the desired time at the station. Furthermore, the access point may be able to determine the transmission time between itself and the other access point and use this in instructions it may send to the other access point.

According to an embodiment, the method comprises, upon determining the first time-delay, sending, by the first device, a fifth message to trigger a data message transmission, and sending, by the first device, a data message the first-time-delay after the trigger message.

According to an embodiment, if the third delay value is less than zero, the first-time-delay equals a sum of second time-delay value and a third time-delay value, and if the third delay value is greater or equal than zero. The first time-delay value equals a difference of the second time-delay value and the third time-delay value

According to an embodiment, the fifth message includes a fourth time-delay and if the third time-delay value is less than zero, the first time-delay equals a second time-delay value plus the fourth time-delay plus a third time-delay value, and if the third delay value is greater or equal than zero, the second time-delay value plus the fourth time-delay minus the third time-delay value.

According to an embodiment, the second time-delay is the transmission time between the first access point and the second access point, and the third time-delay is the difference between the transmission time from the first access point to the station and the transmission time from the second access point to the station.

According to an embodiment, the first access point sends a first messages, the first access point receives one or more second and/or third and/or fourth messages, the first access point computes the first-time-delay from more than four messages wherein the fives messages comprise at least one of a first message, at least one of a second message, at least one of a third message and at least one of a fourth message.

According to an aspect, there are provided an apparatus and a computer program product arranged to implement the methods defined

## BRIEF DESCRIPTION OF THE DRAWINGS

The above, as well as additional objects, features and advantages of the disclosed devices, systems and methods, will be better understood through the following illustrative and non-limiting detailed description of embodiments of devices and methods, with reference to the appended drawings, in which:

Fig. 1 represents a wireless network according to an embodiment.
Fig. 2 represents a wireless network according to an embodiment.
Figs 3a and 3b represents an exchange of messages in wireless network according to an embodiments.
Fig. 4 represents a wireless network according to an embodiment wherein one of the devices in the network is in motion.
Figs. 5 and 6 represent a wireless network and a use of detection thresholds according to an embodiment.

## DETAILED DESCRIPTION OF EMBODIMENTS

In the following description, same references designate like elements. In the following, though terminology used most frequently in the context of Wi-Fi is used, it should be understood that the present is not limited to use with Wi-Fi. Indeed, by 'access point' or 'AP', any analogous device such as a base station may be understood. Similarly, by 'wireless device', 'station' or 'STA', any device arranged to communicate with an AP or a base station - such as a User Equipment (UE) may be understood.

In some approaches, coordinated/ joint transmission (including coordinated beamforming or spatial re-use) - may be performed in a process comprising four steps :

AP discovery that may include BSS / new channel setup. This step may include the identification of peers with coordinated beamforming capabilities, including the exchange of those capabilities and the configuration of the peer devices (e.g., security, BSS color, etc.);

non-AP STA identification that may happen with a time scale of few 100ms to a few seconds. This second step may involve the identification of candidate noon-APs, e.g., based on active downlink traffic, or the exchange of semi-static info common for multiple transmit opportunities (TXOPs) such as non-AP capabilities, identities (AID), PPDU parameters;

sounding phase happening with a frequency similar to (DL) MU-MIMO. This phase may involve the CSI acquisition, e.g., in-BSS and across-BSS, the joint sounding may be such that each AP sounds only its own non-APs and the process may involve sending a NDP announcement by the APs, the sending of a joint NDP by the different APs, the transmission (by the AP(s)) of a trigger frame triggering the return or a beamforming report and finally the transmission of beamforming reports by the STAs;

finally in the last step a per-TXOP coordination is performed. This may happen every 5 ms and may be used to identify STAs / non-APs to be served by the current TXOP or Nss configuration including the computation of the precoder. The participating APs need to know which STAs will be serviced to determine beamforming and nulling directions as well as TXOP duration, and contents of the shared preamble such as puncturing, etc. This last step is a per-TXOP coordination that enables flexibility to the APs. An AP can communicate in a response frame to another AP the set of non-APs it wants to transmit to, selecting non-APs based on traffic, QoS parameters, etc.; furthermore, APs may exchange parameters, e.g., for correct nulling, construct a common preamble, etc.; finally, control frame transmissions from the APs may be used to notify the non-APs of the TXOP, so that the can clear the medium in response. In step (4), an AP may initiate TXOP with an initial control frame to the STAs associated with the AP, e.g., a MU-RTS/BSRP) and to a second AP.

The inventor has realized that such approaches may present challenges, in particular, in the context of joint/coordinated transmission, and may benefit from embodiments disclosed herein.

In step 1), it is most convenient that the supported transmission modes (e.g., SU-MIMO or joint/coordinated transmission) and transition between modes be configured. It is convenient to determine, at this point, how the APs are connected. The APs may also learn their relative positions so that joint/coordinated transmission can be performed (learning the relative positions and configuring a reference beamforming direction is required to make sure that, e.g., two AP can beamform towards the same STA).

For step 2), it is desirable to establish which AP performs the identification and under which circumstances a non-AP will be offered joint/coordinated transmission (for example, coordinated beamforming), instead of, e.g., SU-MIMO, i.e., when it is activated. A process whereby the joint/coordinated transmission is stopped is desirable.

In step 3), the procedures may require the computation of the transmission time difference to make sure that the reception of transmitted data by two APs is constructive at the non-AP/STA.

In step 4, per-TXOP coordination may also be advantageous to joint/coordinated transmission, whereby communication parameters such as the difference of the transmission time may need to be recomputed. APs may also need to exchange the available communication resources (e.g., RUs that are available (to them)) to determine the communication resources (e.g., a RU (or an MRU)) that can be used by all APs in the joint/coordinated transmission.

Therefore, embodiments disclosed herein attempt to address these challenges.

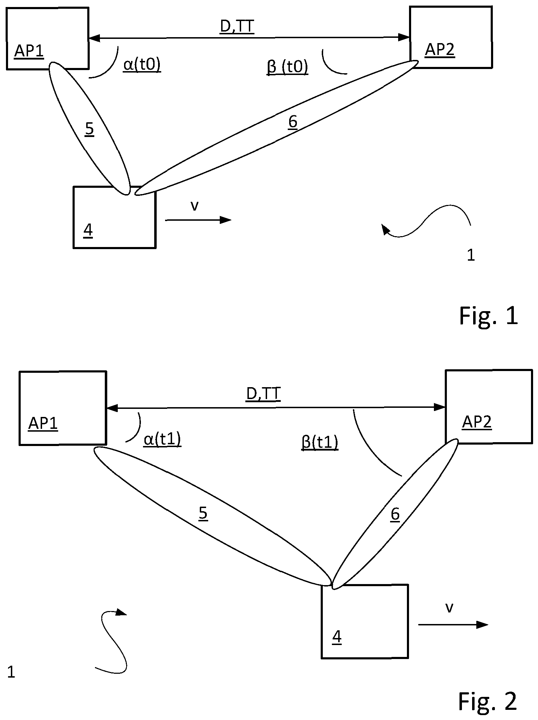

Fig. 1 and Fig. 2 represent a wireless network (or 'a system) 1 according to embodiments wherein Fig, 1 shows the wireless network 1 at a first time t0 and Fig. 2 shows the wireless network 1 at a second time t1. The wireless network 1 contains a first access point (AP1) and a second access point (AP2) and a wireless device (or 'STA') 4. The first access point AP1 uses a beam 5 to communicate with the wireless device 4. The second access point AP2 uses a beam 6 to communicate with the wireless device 4. The first and second access points AP1, AP2 are placed apart at a distance D such that there is a time (TT) for transmissions from one to the other. Beam 5 is oriented at an angle $\alpha$(t0) relative to the path between the first and second access points 2, 3 and beam 6 is oriented at an angle $\beta$(t0) to a line between the first and second access points 2, 3.

Between time t0 in Fig. 1 and t1 in Fig. 2, the location of the STA 4, with respect to the AP1 and AP2, has changed. In Fig. 1. the wireless device is closer to AP1, and in Fig. 2 it is closer to AP2. In both cases, the time for a transmission between the STA 4 and the first AP1 is different from that of a transmission to the second AP2. For example, in Fig. 1 the transmission time from the first AP1 to the wireless device 4 is shorter than from the second AP2 to the wireless device. Consequently, for joint/coordinated transmission from the two APs 2, 3, the second AP2 should start transmitting before the first AP1 starts transmitting so that both wireless signals arrive at the wireless device 4 simultaneously. In Fig. 2, at time t1, the situation is reversed. There, the orientations of beam 5 and 6 have changed to angles $\alpha$(t1) and $\beta$(t1), relative to the line between first and second AP1 & AP2.

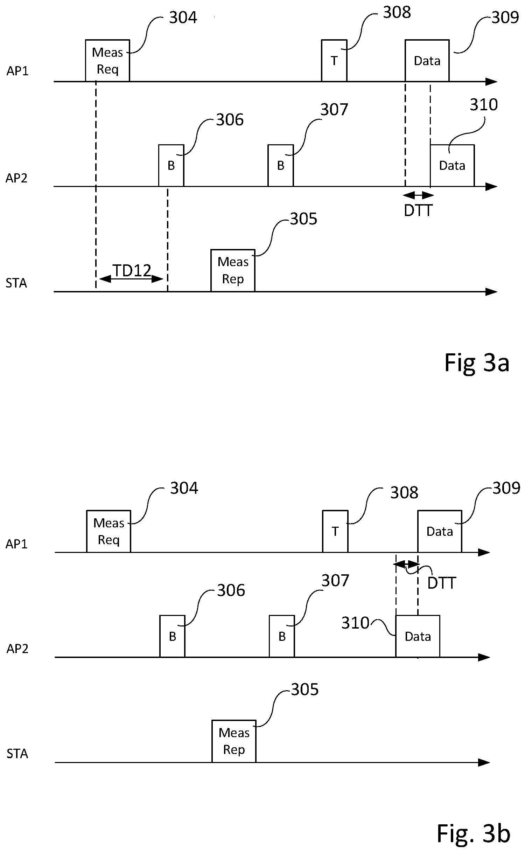

Figs. 3a and 3b represent message exchanges according to embodiments arranged to achieve joint/coordinated transmission in the situations represented in Figs 1 and 2. Fig. 3 represents the situation in which a wireless device 4 (STA) is closer to AP1 and Fig. 3b represents the situation in which STA 4 is closer to AP2. Not all the steps in these Figures may be always required, and some steps may be performed multiple times. It should be noted that AP1, AP2 and the STA have the same reference numerals as the devices in Figs. 1 and 2 to indicate their correspondence. i.e. AP1 corresponds to the first AP1.

In Fig.3a, the first access point 2 (AP1) may send a measurement request 304 (Meas Req) to the STA to request a measurement report 305 (Meas Rep). This may be to facilitate something such as beam forming between AP1 and the wireless access device 4. This message may also inform other access points about the intention to perform a joint/coordinated transmission over multiple access points and so request a configuration from them, such as timing information. This measurement request may also trigger a second access point 3 (AP2) send a beacon 306 (B). This beacon 306 may then be used by the wireless device to obtain measurements that may be included in the same measurement report 305. The measurement report 305 may then include measurements from AP1 and/or AP2. Upon transmission of the measurement request 304, the AP1 may start a first timer T1 whose purpose is to determine the transmission times between the devices, AP1, AP2, STA. Upon transmission of the beacon 306, AP2 may start a second timer T2 with a similar purpose.

The STA may determine a time difference TD12 between the reception of the measurement request 304 and the beacon 306. To this end, it may start a timer when the measurement request 304 is received and stop it when beacon 305 is received. As may be seen in Fig. 3a, the respective arrival times at the STA of the measurement request 304 and the beacon 305 are slightly later than their transmission times because of the transit times between AP1 and the STA. Accordingly, the measurement report 305 may include this time difference TD12.

The AP2 may stop the timer T2 upon reception of the measurement report 305, determining in this manner a first round-trip time (RTT1) of sending beacon 306 and receiving the measurement report 305. The RTT equals twice the transmission time from AP2 to the STA and thus, it allows the second access device to obtain the transmission time from AP2 to the STA (TT2).

The AP2 may send a second beacon 307 upon receiving the measurement report 305, the second beacon 307 including a timing value of TT2. This timing value can be received by AP1 and/or STA.

The AP1 may stop the timer T1 upon reception of beacon 305 determining in this manner the round-trip time of sending the measurement request 304 and receiving beacon 305 that equals twice the transmission time from AP1 to AP2, and thus, it allows the first access point to obtain the transmission time TT from AP1 to AP2.

The AP1 may stop the timer T1 upon reception of the measurement report 305 determining in this manner, a second round-trip time (RTT2) of sending the measurement request 304 and receiving the measurement report 305, RTT2 being equal to twice the transmission time from first access device to the wireless device, and thus, it allows the first access device to obtain the transmission time from AP1 to the STA (TT1). It is to be noted that STA should send the measurement report 305 after receiving beacon 306 - which is received some time, TD12, after receiving the measurement request 304. Thus, when obtaining TT1, it is obtained as (T1 - TD12) / 2.

The first AP1 now knows TT, TT1, and TT2 and so is able also to calculate the difference of the transmission times (DTT) where DTT = TT1 - TT2. DTT is the time difference of the transmission time from the AP1 to the STA and the transmission time from the AP2 to the STA. The value of DTT may then be used to adjust the transmission time of a data transmission 309, from the AP1, so that it arrives at the STA at the appropriate time relative to a data transmission 310 from AP2 to the STA.

In some cases, messages 304, 305, 306, 307 may be sent multiple times to obtain a better estimate of DTT, or TT. This may be in particular applicable when AP1 and AP2 and STA are static devices. AP1 (the first access point 2) may send a trigger frame 308 to trigger the synchronized transmission of a data message to the STA by the first and second access points 2, 3 (i.e. AP1 and AP2). The trigger frame may include a time-delay TD which will be used in calculating the time of transmission of the data frame(s).

In some cases, the trigger frame may include the information that AP2 needs to send to the STA. In some cases, the information may be transmitted or may have been transmitted via a different message.

The AP1 may start a timer T3 upon transmission of the trigger frame 308 and the AP2 may start a timer T4 upon reception of the trigger frame 308. The AP 1 may transmit a data message 309 when T3 reaches TD + TT - DTT, when DTT is greater than or equal to zero. This means that AP1 starts the transmission of data message 309 before AP2 starts the transmission of data message 310 and this corresponds to the situation depicted in Fig. 3a i.e. when STA is closer to AP2 than AP1. The AP2 may transmit the data message 310 when T4 reaches TD as included in the trigger frame 308.

Fig. 3b represents exchanges corresponding to the situation depicted in Fig. 1, where the STA is closer to AP2 than to AP2. In this situation, data message 310 should be transmitted before data message 309. To this end, AP1 may transmit a data message 309 when T3 reaches TD + TT + ABS(DTT) when DTT is smaller than zero - here ABS(DTT) returns the absolute value of DTT.

Any or all of the devices (AP1, AP2, STA) may include a value for the processing time to receive, process, transmit a message in the exchanged messages so that the other devices can take this time into account to obtain more accurate time estimates. For instance, STA may include the processing time to process the measurement request 304 and/or beacon 306 and/or compute the measurement report and/or transmit the measurement report 305 in the measurement report so that the first and/or second access point can obtain a better estimate of the transmission time.

The measurement request 304 may be used to trigger the sending of beacon 306, measurement report 305, and beacon 307 so that upon reception of beacon 306, measurement report 305, and beacon 307, the first access point 2 (i.e. AP1) has all timing information to perform the joint/coordinated transmission. In other embodiments, multiple messages may be used to obtain this timing information, e.g.

AP1 and AP2 may obtain the transmission time by exchanging two messages,

AP1 and STA 4 may obtain the transmission time by exchanging two messages,

AP1 and STA 4 may obtain the transmission time by exchanging two messages.

In a situation AP 1 and AP2 may be static devices, meaning that repeated measurements of TT may not be necessary. Likewise if STA remains stationary, TT1 and TT2 may not be measured again, but AP1 may use known values of TT, TT1, and TT2 to perform the joint/coordinated transmission with cooperative beamforming.

In an embodiment, one AP adopts the role of managing the modes of communication and sends instructions to the other AP. The managing AP is referred to as the primary AP herein.

The messages in Fig. 3a and 3b may also be used to collect beamforming information. In this case, AP1 and AP2 act as beamformers and STA 4 acts as beamformee.

For Wi-Fi, beamforming is achieved by applying a steering matrix Q to the data to be transmitted. The device applying the steering matrix Q is referred to as the beamformer and the receiving device is called the beamformee. The steering matrix Q may be very large so, to save bandwidth, the beamformee calculates a feedback matrix V using measurements it makes on packet received from the beamformer. The beamformee may send either a compressed form of the feedback matrix to the beamformer or a non-compressed form in a beamforming report or CQI report. The feedback matrix V is then used by the beamformer to calculate the steering matrix Q. This process may be iterated in order to refine the beamforming.

In Wi-Fi, the packet used for calculating the V matrix is the sounding or Null-Data Packet (NDP).

The beamformee receives an NDP and processes each of the OFDM subcarriers independently in its own matrix to describe the effect of the channel between each transmitter antenna and each receiver antenna on that subcarrier. The resulting matrix is transformed into a matrix of angular representations. This matrix is assembled with other parameters such as average SNR and transmitted back to the beamformee.

Message 304 may comprise a Null Data Packet (NDP) announcement frame (NDPAF) and an NDP frame.

The NDPAF may include (for single user MIMO) the identity of the intended STA, feedback type, number of columns (Nc) in the feedback matrix (one column per spatial stream). The feedback type may be set to joint/coordinated transmission. This message may also include the number of access points that may cooperate in the joint/coordinated transmission, the identity of the access points (in this case, AP2) that should cooperate in the beamforming. This message may also include the expected parameters (e.g., Nc parameter) for AP2.

After the NDP announcement frame, an NDP frame may be transmitted containing training symbols for each spatial stream to be used in transmission.

It should be noted that that where the NDPAF includes parameters for multiple APs, those APs should previously exchange their available parameters, e.g., the maximum number of available spatial streams. This may be advantageous to reduce the repetition of this information. Similarly, APs may negotiate the frequency and timing of the sending messages 304, 306 and 307 (all or individually). The frequency of the sending of messages 304/306/307 may depend on things like whether beamforming is for a single user or for multiple users. For instance, AP1 may be currently serving two wireless device i.e. STA 4 and another STA (not shown) by means of MU-MIMO whilst AP2 may be serving a single device i.e. STA 4. This may require that AP 1 sends its NDP frame (304) with a higher frequency than AP2 sends its NDP frame (306). This may be indicated to AP2 so that AP2 is not required to send its NDP frame with the same high frequency. This may also be indicated to STA 4 so that it reports feedback matrices for AP 1 and AP2 with a different frequency.

In some cases, AP1 may be aware of the maximum number of available spatial streams of another AP2, but for a specific transmission, it may set / require a lower number of spatial streams, and this may be done by means of the NDPAF message.

The message 306, sent by AP2, may comprise an NDP frame containing training symbols for each spatial stream as may have announced in the NDP announcement frame sent by AP1.

In some cases, message 306, sent by AP2, may also comprise a Null Data Packet (NDP) announcement frame including its specific parameters (e.g., Nc) prior to sending the NDP frame, e.g., when some parameters are set by AP2 and not AP1.

Upon reception of the NDP frames (in messages 304 and 306), wireless device STA 303 (beamformee) will compute the feedback/beamforming matrixes for all n beamformers involved (in this case AP1 and AP2), i.e. ST computes n feedback matrixes and the measurement report 306 includes n feedback matrixes. This may be communicated in a compressed beamforming action frame that may indicate how many feedback matrixes are included, e.g., in the MIMO control frame, whereby this may include the identity of each of the beamformer for which a feedback matrix is provided in current message 306, including the specific parameters (Number of Columns / Rows, channel width, grouping, codebook, etc.). The measurement report may comprise a single message including the feedback matrixes for each of the n beamformer AP, or it may contain n messages, each message containing a feedback matrix addressed to a different beamformer AP. Where a single message is sent, it may be convenient to send this with an omi-directional transmission. Upon reception of measurement report 305 including the feedback/beamforming matrix(ces), the AP beamformers that received a feedback matrix may use it to obtain a steering matrix.

In an option indicated above, AP1 and AP2 may not send NPD frames with the same frequency, and as a consequence, STA 4 may not report the corresponding feedback matrices with the same frequency, e.g., STA 303 may report feedback matrixes for AP1 with a higher frequency than for AP2, e.g., when AP1 is performing MU-MIMO and AP2 is performing SU-MIMO (for example) and AP1 and AP2 are serving STA simultaneously. Still, AP2 may benefit of the feedback matrix from STA to AP1.

In an option, if AP2 determines a significant angle change determined by the feedback matrix from STA to AP1 at time t1 compared with a previously sent feedback matrix at time t0, it may determine that it should send message 306 (NPD frame) to obtain its own feedback matrix. This is because an angle change for AP1 also implies an angle change for AP2. When "on-demand" transmission of message 305 is sent may depend on value change of the beamforming angle that may be greater than a threshold, where this threshold may have been previously configured.

In an option, if AP2 knows its own beamforming angle at time t0 denoted as $\beta(t0)$ and the beamforming angle for AP1 at time t0 (i.e. $\alpha(t0)$), and observes a beamforming matrix at time t1 which implies a beamforming angle change for AP1 (i.e. $\alpha(t0)$ is not equal to $\alpha(t1)$), AP2 may use the information of the change from $\alpha(t)$ to $\alpha(t1)$ to obtain a new estimate for $\beta(t1)$ without having received a beamforming matrix. This new estimate may be obtained using previous angle samples that may give an indication of the movement pattern of the STA, i.e., direction/speed. For instance, knowing D between AP1 and AP2, as well as $\alpha$ and $\beta$ at a series of times prior to a time t+dt, AP2 can estimate $\beta$(t+dt).

In an embodiment, the STA may be instructed to return the full feedback matrix for one of the APs, e.g., AP1, with full information about the angles, and a compressed feedback matrix for another AP, e.g, AP2. For instance, the first full feedback matrix may require a first angle accuracy for each angle/subcarrier, e.g., a first number of bits per angle/subcarrier and the compressed feedback matrix may require a second angle accuracy, e.g., a second number of bits per angle/subcarrier, where first angle accuracy is more accurate than the second angle accuracy, e.g., the second number of bits per angle/subcarrier is lesser than the first number of bits per angle/subcarrier. Despite the lower accuracy, this second angle accuracy may be enough to perform beamforming by the second AP2 (i.e. AP2) given the information in the first full feedback matrix. For instance, the second number of bits per angle/subcarrier in the compressed feedback matrix may be less and related to the least significant bits because information of the most significant bits may be derived from the rough location of the STA 4 with respect to the first access point AP 2, given the information in the first full feedback matrix (and further information such as the distance / relative position between APs). The second angle accuracy may be configurable or chosen or signaled on demand, e.g., by AP1 and/or AP2 and or the STA 4. This option is advantageous because it allows reduction of the use of computing resources.

In an embodiment, AP1 and AP2 may be able to characterize, measure or determine the distance between both APs, e.g., by multiple round-trip transmissions. When this is done, the APs may determine the distance to a target wireless device STA 4 given the fact that the information received in the feedback matrixes determine the angle of the beams of both APs. Thus, given the distance between the APs, and the beam angles, it is possible for the APs, in particular, for AP1, to determine the location of the STA 4, e.g., whether it is closer to AP1 (Fig. 1) or AP2 (Fig. 2) and the specific distance D1 from AP1 to STA and the specific distance D2 from AP2 to STA. Given D1 and D2, AP1 can determine another estimate of DTT as (D1 - D2)/c where c is the speed of light. This method may be used as an alternative to the method presented above to compute DTT.

In an embodiment, two methods to obtain DTT (e.g., method 1 using TT1 and TT2 measurements and method 2 using D1 and D2 measurements derived from the feedback matrixes) may be combined to obtain a better estimate of DTT, for example, as a function of the DTT estimates via both methods. For instance, as:

$$DTT = W1*DTT(method1) + (1-W)* DTT(method\ 2)$$

Where W is a weighting value between 0 and 1. In some cases, W may be a dynamic value that may be communicated, e.g., in message 304 (e.g., in the NDPAF). If only method 2 is used, then message 307 may not be required and the computations in method 1 may not be needed.

Which methods are used and/or whether the estimates using different methods are combined may be determined by AP1, that may act as master AP / beamformer. It may also depend on the desired performance that is required and the currently measured performance. A first method (e.g., more expensive method) may be used less frequently, while a second method (more lightweight method) may be used more frequently and use to update the estimate. A first method (more accurate, but more costly in terms of resource usage) may be triggered only when a second method (less accurate, but more lightweight) deviates more than a given threshold from the current value.

In an option, the AP may be configured with an Artificial Intelligence/Machine Learning (AI/ML) model that can be used to predict certain parameters, such as parameters of the steering matrix such as beamforming angles and/or timing parameters such as TT1 / TT2 and/or distances such as D1 / D2. For instance, given a set of measurements as above: $\alpha$ (t0), $\alpha$ (t1), $\alpha$(t2),... and $\beta$(t), $\beta$(t1), $\beta$(t2), the AI/ML model may be requested to predict the current measurement for $\beta$(t+dt). This is useful where one of the access points does not receive the feedback matrix (for whatever reason). Similarly, as illustrated by means of Fig. 3a and Fig. 3b, there is a delay between the point of time in at which AP1 and AP2 receive measurement report 305 (containing the matrixes) and the times at which the data messages 309/310 are transmitted. This can lead to the computation and use of steering matrixes which are out of date because the STA 4 has changed its location. Thus, if the data messages are transmitted at time t + st, the AI/ML model may be requested to predict, e.g., the feedback matrixes (FM) for AP1 FM1 and AP2 FM2 given feedback matrixes at previous instants of time. For instance, given FM1(t), FM1(t-kT), FM1(t-2kT),... predict FM1(t+sT) and use the predicted FM1(t+sT) to determine/compute the steering matrix.

Some potential types of AIAIL models that can be used to predict parameters given a time series of previous parameters as illustrated above are:

- Recurrent neural networks (RNNs) or variants such as long short-term memory (LSTM) or gated recurrent units (GRU), which can learn from sequential data and capture temporal dependencies.
- Convolutional neural networks (CNNs), which can extract features from spatial or temporal data using convolutions and pooling operations, and may be combined with RNNs for hybrid models.
- Attention-based models, which can learn to focus on relevant parts of the input sequence and encode contextual information, and may be used with RNNs or CNNs for enhanced performance.

- Transformer models, which can model long-range dependencies in sequential data using self-attention mechanisms and skip the recurrence or convolution steps, and may be more efficient and scalable than RNNs or CNNs.
- Bayesian models, which can incorporate prior knowledge and uncertainty into the predictions and update the beliefs based on new evidence, and may use probabilistic graphical models or variational inference methods.

It is to be noted that the usage of the AI/ML models may also be applicable when there is no joint/coordinated transmission, but e.g., only SU-MIMO from an access point to a wireless device.

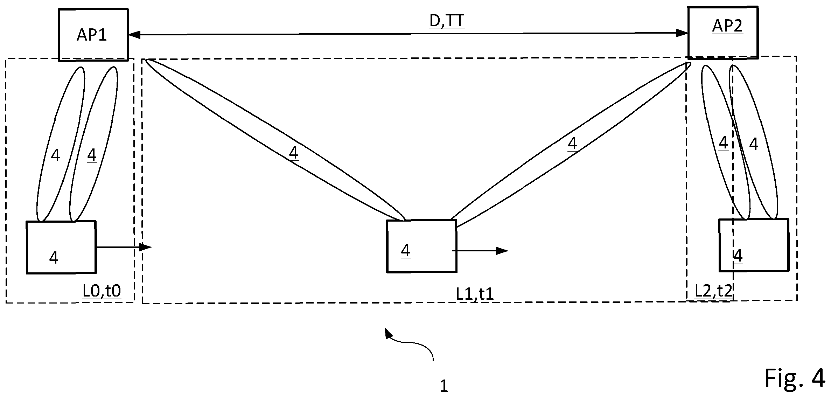

Fig. 4 represents a situation where the STA 4 moves from a location L0 close to AP1 at time t0 to another location L2 close to AP2 at time t2. At time t1, the STA 4 is somewhere between AP1 and AP2. At location L0, the STA may perform SU-MIMO communications with AP1. At location L2, the STA 4 may perform SU-MIMO with AP2. In between, at time t1, the STA 4 may perform a joint/coordinated transmission with both AP1 and AP2 as per other embodiments.

The APs AP1 and AP2, and the STA 4 need to coordinate themselves to determine when / whether to transition from single-AP-device operation (e.g. SU-MIMO) (by AP1) to joint/coordinated transmission (by AP1 and AP2), and then again to single-AP-device (by AP2); or directly from single-AP-device operation AP1 to single-AP-device operation with AP2.

In an embodiment, AP1 may determine that the STA 4 is approaching location L1 where joint/coordinated transmission and/or SU-MIMO (by AP2) is feasible. Depending on the motion vector (direction, speed) of the STA 4, AP1 may request AP2 (e.g., in the measurement request 304 as per Fig. 3a) to send sounding signal 306 or 307 so that the STA 4 can compute the measuring report / feedback matrix and return it in a measurement report 305. Depending on the measurement report 305 and the feedback matrix reported therein, AP1 and/or AP2 may determine to:

continue using single-AP-device communication (e.g. SU-MIMO (by AP1);
use joint/coordinated transmission (by AP1 and AP2);
transition to single-AP-device communication (by AP2).

By 'single-AP device operation', it is meant having only an operative link with a one AP (or multiple co-located APs e.g. an MLD) as opposed to having links with multiple spatially separated APs.

In an embodiment, the STA 4 may be close to a boundary between L0 and L1 or between L1 and L2. In this boundary, there may be an uncertainty for the STA on whether use single-AP device operation or joint/coordinated transmission and it can lead to a situation in which the wireless device keeps dithers in the selection of the communication mode, e.g., single-AP device operation versus joint/coordinated transmission, because the performance of the links in each communication mode are similar. To avoid this situation, wireless device and / or APs may rely on a hysteresis strategy. For example, the STA 4 makes a first transition (e.g., from a single-AP device operation to joint/coordinated transmission) only if a transmission characteristic of the new AP relative to the AP currently delivering single-AP device operation (for example, SU-MIMO) is greater than a first threshold. Then, the STA 4 makes a second reverse transition (e.g., from joint/coordinated transmission to single-AP device operation) only if a difference of a transmission characteristic (e.g., measured signal strength) of the AP 'offering' single-AP device operation, relative to the current serving APs, is greater than a second threshold. It is advantageous that the first threshold be greater than the second threshold. By 'transmission characteristic', any parameter pertaining to the quality of the link may be understood, including without limitation, received signal strength, a Channel Quality Indication (CQI) report, SNR or Bit Error Rate (BER).

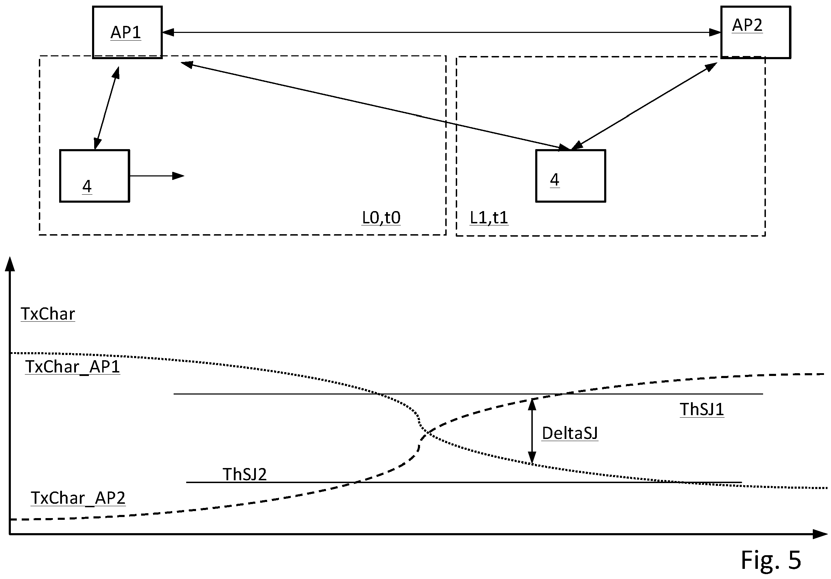

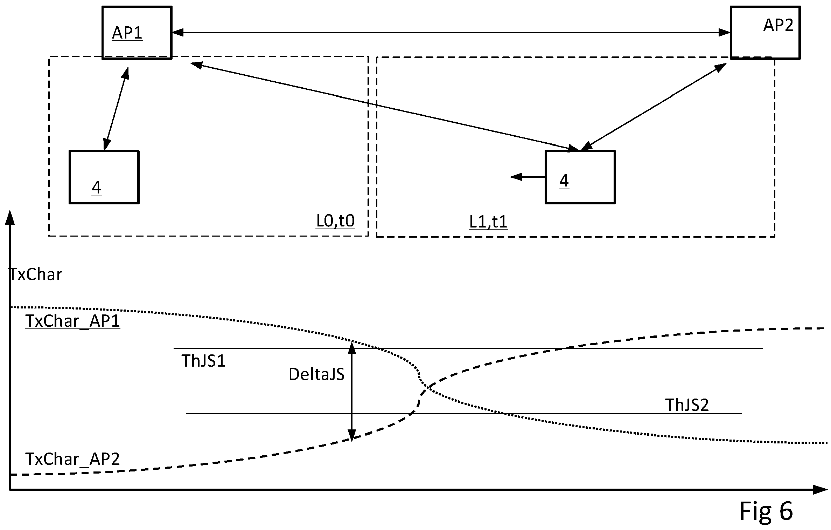

Fig. 5 and Fig. 6 represent the operation of an embodiment which attempts to address the issue of dithering and the use of thresholds. In these examples, the link with a single-AP device is by SU-MIMO though this could be by MU-MIMO. In Fig. 5, STA 4 moves in direction from AP1 towards AP2. The STA 4 moves from single-AP device communication to joint/coordinated communication (single-to-joint). In Fig. 6, STA 4 moves in reverse direction from AP2 towards AP1. The STA 4 moves from joint device communication to single-AP device communication (joint-to-single). A magnitude of a transmission characteristic (TxChar) is shown on a vertical axis vs distance on the horizontal axis.

In the forward direction (Fig. 5), the change from single to joint transmission may happen if the values of the transmission characteristic (TxChar) of communications with AP1 and AP2 (i.e. TxChar_AP1 and TxChar_AP2) satisfy certain conditions. There conditions may be:

TxChar_AP2 may need to be greater and/or equal to a ThSJ2 threshold value; TxChar_AP1 may need to be less and/or equal to a ThSJ1 threshold value;
the difference of TxChar_AP1 and TxChar_AP2 may need to be less than DeltaSJ.

In the reverse direction (Fig. 6), the change from joint/coordinated transmission to single-AP-device may happen if the values of the transmission characteristic (TxChar) of communications with AP1 and AP3 (i.e. TxChar-AP1 and TxChar-AP2) satisfy certain conditions. There conditions may

TxChar_AP1 may need to be greater and/or equal to a ThJS1 threshold value;

TxChar_AP2 may need to be less than a ThJS2 threshold value;

the difference of TxChar_AP1 and TxChar_AP2 may need to be greater than DeltaJS.

The conditions may be applied singly or in different combinations - for example, all of both sets of three for forward and backward or 1 + 2 in the forward direction and 4 + 6 in the reverse direction or just 6 in the reverse direction. Furthermore, the conditions may be applied conditionally between themselves. For instance, if the condition to pass from single-AP-device to joint mode has been satisfied, then the applicable conditions and the thresholds are those of the joint-to-single transition. In such as case, DeltaJS may be set to be greater than DeltaSJ or ThJS1 may be set higher than ThSJ1 or ThJS2 may be set lower than ThSJ2 or some combination of these. Where the previous transition was from joint to single mode, the above logic may be applied in the opposite sense accordingly.

In an embodiment, the STA signals to whichever AP (either AP1 or AP2 or both) is serving it that the transmission characteristic is close to or has crossed the threshold being applied. In a variant, the comparison being to determine whether higher communication performance may be achieved by single-AP-device or joint/coordinated communications, The signaling concerning the transmission characteristic and the threshold may be used to indicate a recommendation by the STA to at least the primary AP that a change in transmission mode occur and/or it may indicate a change by the STA in which thresholds(s) it is using. The indication may be achieved by setting the value of a buffer status report (BSR) to a predetermined value such as the maximum value possible for the field. In a variant, the STA may report a modulation coding scheme (MCS) value change in a frame sent to one or both of AP1 and AP2.

In a scenario, a first AP may have a good connection to a first wireless device, e.g., via SU-MIMO with two spatial streams. However, a second wireless device may approach the first AP1 and the first AP1 may decide to apply MU-MIMO using, e.g., one spatial stream for each wireless device, and the first wireless device may receive data by means of SU-MIMO via a second AP. The data transmission from the first and second APs 2, 3 to the first wireless device is a joint transmission. To cater for such a scenario, it would be advantageous for the (first) AP to have a configuration whereby it determines how load is distributed among the available APs by means of SU-MIMO, MU-MIMO, and joint /coordinated transmissions. It should be noted that this is an example of a possible scenario and that SU-MIMO and joint/coordinated communications are not the only alternatives - indeed the system 1 may have a choice between a single MU-MIMO link and joint/coordinated communications. The configuration may determine conditions and/or thresholds for choosing different transmission modes. In particular, the first AP1 may choose

SU-MIMO (for example) to serve a wireless device if the wireless device is in certain coverage area (e.g., AP1 may use SU-MIMO when wireless device is in L0 as per Fig. 4), and shift to MU-MIMO when another wireless device needs to be served, shifting one or more spatial streams to the second AP2 that will serve the first wireless device via SU-MIMO and first and second AP 1 and AP2 will jointly serve the wireless device by means of joint/coordinated transmission.

Joint/coordinated transmission to serve a wireless device if the wireless device is between the coverage area of the first AP1 and the second AP2 (e.g., wireless device is in L1 as per Fig. 4).

The certain coverage area may be predetermined (for example as part of the APs configuration) or may be adjusted according to prevailing conditions (for example, observed SNRs as provided in the beamforming reports.

In some cases, the AP 1 and AP2 may need to determine how they are connected - via a wire (e.g., Ethernet connection) or wireless connection (e.g., high frequency link) or how they receive data from the backhaul (e.g., via cellular connection available in both the AP1 and AP2). Being able to determine how the APs are connected is useful because if a "good" connection is not available that allows exchanging the data to be transmitted, a joint transmission capability may not be offered; while if the connection is available, joint/coordinated transmission can be enabled.

In an embodiment, joint/coordinated transmission from a first AP and a second AP to a wireless device (or STA) 4 may be enabled based on a policy. For example, if the connection quality of a link from the AP1 and AP2 is higher than connection quality of links from the any of the APs individually. For instance, this may mean that a joint/coordinated transmission may only be advantageous when the wireless device is located far from both the AP 1 and AP2, whilst if the wireless device finds itself to the first AP1, it may move to a link with solely with AP2. Advantageously, the first AP 1 (or the second AP2) may be configured with one or more of the following:

a procedure to determine a first set of communication parameters that may include how a first AP and a second AP are connected with each other and/or how they exchange uplink/downlink data through a backhaul connection and/or the quality of the communication links (backhaul communication links);

a procedure to determine a second set of communication parameters that may include the quality of each of the links from AP to wireless device, and/or the communication capabilities of a wireless device;

a procedure to choose the transmission mode based on the first and second set of communication parameters.

Additionally or alternatively, this may require determining the location of wireless device with respect to the first AP and second AP, and choose the transmission mode based on the location and location related information/history.

The choice of a joint/coordinated transmission mode may require announcing the capabilities of the devices, e.g., an AP or wireless device. The wireless device may announce/communicate its joint/coordinated transmission capabilities in a beacon message, and/or probe response message, and/or (re)association response frames.

Such a transition from a 'single AP' link to a joint/coordinated link i.e. the STA 4 receiving transmissions from both AP 1 and AP2, may require coordinated beamforming.

Aspects such as the choice of a joint/coordinated transmission mode may require announcing the capabilities of the devices, e.g., an AP or STA. Similarly, aspects such as the choice of a joint/coordinated transmission mode or switch between modes may require signaling the decision performed by, e.g., an AP or STA. In general, different information may need to be signaled to enable this invention. Signaling may be performed by means of management frames. Management frames include, e.g., an association request, a reassociation request, a probe request, a beacon, an action frame, a timing advertisement, a disassociation frame, an association response, a reassociation response, a probe response, etc. An association request frame is sent by a station to request access to an access point in order to join a basic service set (BSS). The station may include its capabilities in this frame. It may only include capabilities that an AP may have announced, e.g., in a beacon or probe response frame. An AP replies to an association request frame with an association response frame. Reassociation request/response frames are used to indicate the AP a STA would like to move. In the case of this invention, these frames may be adapted to indicate that a STA would like to start using a STA in joint/coordinated transmission mode. A probe request/response are used when scanning is performed. A STA can send a probe request, e.g., with (no/a specific) SSID. The probe response targets a given STA that sent the request. Beacons are sent by an AP, e.g., at regular time intervals (target beacon transmit time) to advertise, e.g., SSIDs. A beacon includes the configuration of the wireless network, capabilities, etc. A disassociation frame is sent by AP or STA to stop the connection between AP and STA. In this invention, a disassociation frame may be sent when a STA is moving from joint/coordinated transmission to Single-User MIMO (SU MIMO). An action frame can be used to trigger an action such as requesting a measurement, sending a measurement report, requesting/reporting transmit power control, announcing channel switch. A timing advertisement frame may be used to communicate the time. The timing values may also be used by a STA to obtain timing information. For example, in the context of this invention, if two APs / STA are synchronized / share a common clock, and the APs transmit timing advertisement frames, a STA can determine / measure the difference of the transmission time by obtaining the timing values in the timing advertisement frames, and computing the difference with its own time. For instance, in the context of this invention, if two APs transmit frames such as timing advertisement frames simultaneously, and they arrive at different instant of times, t2 and t3, then the difference of the transmission time is t3-t2. For instance, in the context of this invention, if two APs transmit frames such as timing advertisement frames at time t0 and t1, and they arrive at different instant of times, t2 and t3, then the difference of the transmission time is (t0-t1) - (t2-t3). This method/embodiment can be used, e.g., to replace or combine the accuracy of the round- trip time method in other embodiments in this invention. The wireless device and/or AP may announce/communicate its joint/coordinated transmission capabilities in, e.g., a beacon message, and/or probe response message, and/or (re)association response frames.

The decision to start/stop using joint/coordinated transmission may be signaled in, e.g., a beacon message, and/or probe response message, and/or (re)association response frames.

Control frames may also be used in embodiments. Examples of control frames include beamforming report poll, null data packet (NDP) announcement, control frame extension, control wrapper, block acknowledgement (ACK) request, block ACK, PS-Poll, request to send (RTS), clear to send (CTS), ACK. In the context of this invention, the beamforming report poll may be adapted, e.g., to request a STA for additional feedback about the RF conditions with another AP.

A primary AP initiating the joint/coordinated transmission may need to deliver data to one or more secondary AP - this delivery may be through a backhaul or in-band. In-band may refer to a wireless link, while through a backhaul may refer to a wired link or even a cellular link to each of the APs in the context of a distributed residential gateway.

A backhaul connection may be faster, but synchronization may be required, e.g., by indicating when the secondary AP has to transmit. To this end, the APs may need mechanisms such as a common clock. Also, even if data is exchanged through the backhaul, a signal sent by the primary AP or the STA in-band to trigger the joint/coordinated transmission may be needed. It is to be noted that the transmission by the APs may not start simultaneously because the goal is that the data arrives simultaneously at the STA (as described in other embodiments).

For instance, the backhaul performance may vary, e.g., a lower data rate may be available at a given instant of time, and thus, these communication features need to be exchanged so that APs can assess when joint/coordinated transmission may start and/or may apply.

Herein, "a" and "an" and similar phrases are to be interpreted as "at least one" and "one or more." Similarly, any term that ends with the suffix "(s)" is to be interpreted as "at least one" and "one or more." The term "may" is to be interpreted as "may, for example." In other words, the term "may" is indicative that the phrase following the term "may" is an example of one of a multitude of suitable possibilities that may, or may not, be employed by one or more of the various embodiments.

Herein, the terms "comprises" and "includes" are equivalents and should be understood to not exclude not-listed components from being included in the element being described. By contrast, "consists of" provides a complete list of the one or more components of the element in question. The term "based on", as used herein, should be interpreted as "based at least in part on" rather than, for example, "based solely on". The term "and/or" as used herein represents any possible combination of enumerated elements. For example, "A, B, and/or C" may represent A; B; C; A and B; A and C; B and C; or A, B, and C. If A and B are sets and every element of A is an element of B, A is called a subset of B. In this specification, only non-empty sets and subsets are considered. For example, possible subsets of B={cell1, cell2} are: I cell 11, {cell2}, and {cell1, cell2}. The phrase "based on" (or equally "based at least on") is indicative that the phrase following the term "based on" is an example of one of a multitude of suitable possibilities that may, or may not, be employed to one or more of the various embodiments.

The term configured may relate to the capacity of a device whether the device is in an operational or non-operational state. Configured may refer to specific settings in a device that effect the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages comprise a plurality of parameters, it implies that a parameter in the plurality of parameters is in at least one of the one or more messages but does not have to be in each of the one or more messages.

Aspects of the embodiments may be implemented in a computer program product, which may be a collection of computer program instructions stored on a computer readable storage device which may be executed by a computer. The instructions may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

Storage media suitable for storing computer program instructions include all forms of nonvolatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

## Claims

1. A method for managing joint/coordinated transmission from a first access point and a second access point to a station comprising:

   receiving, by the station, a first message from the first access point,
   receiving, by the station, a second message from the second access point,
   computing, by the station, a measurement report,
   transmitting, by the station, the measurement report, and
   adapting the station to receive a joint/coordinated data transmission from the first and the second access points.

2. The method of claim 1 wherein the measurement report includes the time difference between the reception of the first message from the first access point and the reception of the second message from the second access point.

3. The method of any preceding claim wherein the first message includes a request to perform a joint/coordinated transmission, and the station indicates whether it accepts the joint/coordinated transmission in the measurement report.

4. The method of any preceding claim wherein the station compares a transmission characteristic to at least one of either a first or a second threshold and wherein the station sends an indication of a change of a selection between the first and second thresholds.

5. A method of managing joint/coordinated transmission from a first access point and a second access point to a station comprising:

- sending, by the first access point, a first message,
- receiving, by the first access point, a second message from the second access point,
- receiving, by the first access point, a third message from the station,
- receiving, by the first access point, a fourth message from the second access point, and
determining, by the first access point, a first time-delay from the second message, the third, and the fourth messages.

6. The method of claim 5 comprising, upon determining the first time-delay,

sending, by the first device, a trigger message to trigger a data message transmission,-and
sending, by the first device, a data message the first-time-delay after the trigger message.

7. The method of claim 5 or 6 wherein

if the third delay value is less than zero, the first-time-delay equals a sum of a second time-delay value and a third time-delay value, and
if the third delay value is greater or equal than zero, the first time-delay value equals a difference of the second time-delay value and the third time-delay value

8. The method of any of claims 5 to 7 wherein fifth message includes a fourth time-delay and

if the third time-delay value is less than zero, the first time-delay equals a second time-delay value plus the fourth time-delay plus a third time-delay value, and
if the third delay value is greater or equal than zero, the second time-delay value plus the fourth time-delay minus the third time-delay value.

9. The method of claims 7 or 8 wherein the second time-delay is the transmission time between the first access point and the second access point, and the third time-delay is the difference between the transmission time from the first access point to the station and the transmission time from the second access point to the station.

10. The method of claim 5 wherein

the first access point sends a first message,
the first access point receives one or more of a second and/or third and/or fourth message,
the first access point computes the first-time-delay from more than four messages

wherein the fives messages comprise at least one of a first message, at least one of a second message, at least one of a third message and at least one of a fourth message.

11. An apparatus arranged to manage joint/coordinated transmission from a first access point and a second access point comprising a transceiver adapted to

- receive a first message from the first access point,
- receive a second message from the second access point,
- compute a measurement report,
- transmit the measurement report, and
receive a joint/coordinated data transmission from the first and the second access points.

12. An apparatus arranged to manage joint/coordinated transmission with a second access point to a station comprising a transceiver adapted to:

- send a first message,
- receive a second message from the station,
- receive a third message from the second access point,
determining a first time-delay from the second message and the third message.

13. A computer program product, storable on a computer-readable medium, configured to, when run on a processor, arranged to implement the method of claims 1 - 10.

Fig. 1

Fig. 2

Fig 3a

Fig. 3b

Fig. 4

AP1

AP2

4

4

L0,t0

L1,t1

TxChar

TxChar_AP1

ThSJ1

DeltaSJ

ThSJ2

TxChar_AP2

Fig. 5

AP1

AP2

4

4

L0,t0

L1,t1

TxChar

TxChar_AP1

ThJS1

DeltaJS

ThJS2

TxChar_AP2

Fig 6

## EUROPEAN SEARCH REPORT

**Application Number**

EP 24 18 9822

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/076846 A1 (NEWRACOM INC [US]) 4 May 2023 (2023-05-04) | 1,3,4, 11,13 | INV. H04B7/024 |
| A | * paragraphs [0108], [0110] * <br> * figure 15 * <br>----- | 2,5-10, 12 | |
| X | WO 2023/170647 A1 (ERICSSON TELEFON AB L M [SE]) 14 September 2023 (2023-09-14) <br> * page 28, line 3 - line 12 * <br> * page 29, line 19 - line 32 * <br> * figures 16, 17 * <br>----- | 1-13 | |
| X | WO 2023/170655 A1 (ERICSSON TELEFON AB L M [SE]) 14 September 2023 (2023-09-14) <br> * claims 19, 27 * <br>----- | 1,2,11, 13 | |
| X | WO 2023/175513 A1 (ERICSSON TELEFON AB L M [SE]) 21 September 2023 (2023-09-21) <br> * claims 1, 4 * <br>----- | 1,2,11, 13 | |

**TECHNICAL FIELDS SEARCHED (IPC)**

H04B

The present search report has been drawn up for all claims

| Place of search | Date of completion of the search | Examiner |
|---|---|---|
| Munich | 5 December 2024 | Franz, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 9822

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | | Publication date | Patent family member(s) | | Publication date |
|---|---|---|---|---|---|
| WO 2023076846 | A1 | 04-05-2023 | CN 118160229 A | | 07-06-2024 |
| | | | EP 4423919 A1 | | 04-09-2024 |
| | | | KR 20240093876 A | | 24-06-2024 |
| | | | US 2024275544 A1 | | 15-08-2024 |
| | | | WO 2023076846 A1 | | 04-05-2023 |
| WO 2023170647 | A1 | 14-09-2023 | NONE | | |
| WO 2023170655 | A1 | 14-09-2023 | NONE | | |
| WO 2023175513 | A1 | 21-09-2023 | NONE | | |

EPO FORM P0459

For more details about this annex : see Official Journal of the European Patent Office, No. 12/82